# EUROPEAN PATENT APPLICATION

(11) **EP 3 281 533 A1**
(43) Date of publication of application: **14.02.2018**
(21) Application number: 16776677.3
(22) Date of filing: 08.04.2016
(51) Int. Cl.: A23L 17/00

(54) **PRODUCTION METHOD AND PRODUCTION DEVICE FOR FISH PASTE PRODUCT**

(30) Priority: 10.04.2015 JP 2015080512
(71) Applicant: Meikoshokuhin Co. Ltd., Hata-gun, Kochi 789-1720 (JP); Sojitz Corporation, Tokyo 100-8691 (JP)
(72) Inventor: MYOJIN, Hiroyuki, Hata-gun Kochi 789-1720 (JP)
(74) Representative: Green, Mark Charles
(86) International application number: PCT/JP2016/061513
(87) International publication number: WO 2016/163511

(57) **Abstract**

A manufacturing method of a fish-meat paste product includes a process of collecting a raw catfish meat, a process of grinding and shaping the collected raw catfish meat without executing water-leaching to provide a paste product, and a process of heating the paste product at a temperature in a range from 54 °C to 65 °C for at least approximately 20 minutes.

## Description

### FIELD OF THE INVENTION

The present invention relates to a manufacturing method and a manufacturing apparatus of a fish-meat paste product such as Kamaboko, Chikuwa, Satsumaage, Jakoten and else for example.

### BACKGROUND ART

As described in PATENT DOCUMENT 1, for example, a conventional manufacturing method of Kamaboko has in general a process of collecting a raw fish meat of a sciaena albiflora, a black marlin, a deepsea bonefish, a lizard fish, a waraduka (stichaeus grigorjew) or a walleye pollock, a process of water-leaching the collected raw fish meat, a process of dehydrating and straining the water-leached raw fish meat to obtain a surimi (fish-meat paste), a process of freezing the surimi, a process of thawing the frozen surimi, a process of stirring and mixing the thawed surimi with addition of salt, a process of shaping the surimi paste obtained by adding condiments, starch and water to the mixed surimi, and a process of heating the shaped surimi paste.

PATENT DOCUMENT 1 : Patent No. 3630339 Publication

### DISCLOSURE OF THE INVENTION

### PROBLEM TO BE SOLVED BY THE INVENTION

Although it depends on a kind of the raw fish, such conventional manufacturing method of Kamaboko intended to provide a Kamaboko with enough "Suwari" and excellent "Ashi", that is, with enough elasticity and with excellent texture. However, it was quite difficult to manufacture a Kamaboko with such excellent "Ashi" from the frozen surimi.

Also, in the conventional manufacturing method of fish-meat paste product, the water-leaching processing was in general executed to remove unnecessary solution protein and to remove unnecessary fat and fishy smell. However, due to this water-leaching processing, the most of delicious taste was simultaneously removed. Further, not only time and effort required for this water-leaching processing were considerable but also the cost of water used for this water-leaching processing and the cost for treating the contaminated water after the processing were considerable.

In case of manufacturing the frozen surimi of the walleye pollock that has been most commonly used as raw materials of Kamaboko and of other fishes, skins were often mixed therein causing white appearance of the surimi to deteriorate. In addition, in recent years, the price of the frozen surimi of the walleye pollock has soared due to the decrease of resources, and thereby manufacturing cost of Kamaboko has tended to largely increase.

### MEANS TO SOLVE THE PROBLEM

It is therefore an object of the present invention to provide a manufacturing method and a manufacturing apparatus of a fish-meat paste product, whereby a good food-feeling paste product having enough elasticity and excellent texture can be easily obtained.

Another object of the present invention is to provide a manufacturing method and a manufacturing apparatus of a fish-meat paste product, whereby a fish paste product can be obtained without removing delicious taste of the fish.

Further object of the present invention is to provide a manufacturing method and a manufacturing apparatus of a fish-meat paste product, whereby a fish paste product with good white appearance can be obtained.

Still further object of the present invention is to provide a manufacturing method and a manufacturing apparatus of a fish-meat paste product, whereby a cost of the product can be largely reduced.

According to the present invention, a manufacturing method of a fish-meat paste product includes a process of collecting a raw catfish meat, a process of grinding and shaping the collected raw catfish meat without executing water-leaching to provide a paste product, and a process of heating the paste product at a temperature in a range from 54 °C to 65 °C for at least approximately 20 minutes.

It should be noted that, in this description, "catfish" includes "pangasius" from Southeast Asia or "horned pout" other than "a Japanese catfish".

By using catfish meat, it is not necessary to remove water-soluble protein and therefore no water-leaching processing is needed to perform after collection of the catfish meat. Therefore, the delicious taste of fish is completely remained and thus the original fish taste can be supplied. Also, because skins of the catfish are easily exfoliated, no skin can be mixed into the fish meat and thus good white appearance of the fish meat can be certainly maintained. Further, because the catfish particularly "pangasius" is cultivated in large quantities in Southeast Asia and thus it is possible to stably provide in bulk, stabilization in production and supply of the fish meat can be planned. Still further, because the catfish meat is cheap, a product price can be greatly reduced. Furthermore, because no water-leaching processing is necessary to perform at all, not only the delicious taste of fish is maintained but also time and effort required for the water-leaching processing are reduced, and, in addition, no cost of water used for this water-leaching processing and no cost for treating the contaminated water due to the water-leaching processing are necessary. Therefore, a large manufacturing cost reduction and a significant improvement in the productivity that are not conceivable from the conventional manufacturing cost of the fish meat of a walleye pollock or other fish can be expected. Also, although the existing frozen fish-meat paste or surimi has to manage its safekeeping maintenance temperature at around 5 °C and thus it is necessary to perform its preprocessing in two or three days before the start of the manufacturing, however, as for a catfish, no such preprocessing is necessary. Namely, even if the preprocessing of the frozen catfish is performed just before the start of the manufacturing, no deterioration may occur at the safekeeping maintenance temperature. Thus, the manufacturing control becomes very easy. Particularly, according to the present invention, since, after a raw catfish meat is collected, the collected raw catfish meat is ground and shaped to provide a paste product, and then the paste product is heated at a temperature in a range from 54 °C to 65 °C for at least approximately 20 minutes, a gel strength of the paste product becomes extremely high. Also, it is possible to easily provide a good food-feeling paste product with enough elasticity and excellent texture.

It is preferred that the above-mentioned heating temperature is in a range from 57 °C to 63 °C. Thereby, the gel strength becomes higher and the elasticity and the texture further improve resulting that the food-feeling improves more.

According to the present invention, also, a manufacturing method of a fish-meat paste product includes a process of collecting a raw catfish meat, a process of grinding and shaping the collected raw catfish meat without executing water-leaching to provide a paste product, and a process of heating the paste product at a temperature in a range from 56 °C to 62 °C for at least approximately 120 minutes.

In addition to the aforementioned operations and advantages, according to the present invention, since after a raw catfish meat is collected, the collected raw catfish meat is ground and shaped to provide a paste product, and then the paste product is heated at a temperature in a range from 56 °C to 62 °C for at least approximately 120 minutes, a gel strength of the paste product becomes extremely high, and it is possible to easily provide a good food-feeling paste product with enough elasticity and excellent texture.

It is preferred that the above-mentioned heating temperature is in a range from 59 °C to 61 °C. Thereby, the gel strength becomes higher and the elasticity and the texture further improve resulting that the food-feeling improves more.

According to the present invention, further, a manufacturing method of a fish-meat paste product includes a process of collecting a raw catfish meat, a process of grinding and shaping the collected raw catfish meat without executing water-leaching to provide a paste product, a process of heating the paste product at a first temperature for at least approximately 20 minutes, and a process of heating the heated paste product at a second temperature that is higher than the first temperature for at least approximately 15 minutes.

In addition to the aforementioned operations and advantages, according to the present invention, since after a raw catfish meat is collected, the collected raw catfish meat is ground and shaped to provide a paste product, and then the paste product is heated at a first temperature for at least approximately 20 minutes, and thereafter the heated paste product is heated at a second temperature that is higher than the first temperature for at least approximately 15 minutes, a gel strength of the paste product becomes extremely high, and it is possible to easily provide a good food-feeling paste product with enough elasticity and excellent texture.

It is preferred the first temperature is approximately 50 °C and the second temperature is approximately 80 °C. Thereby, the gel strength becomes higher and the elasticity and the texture further improve resulting that the food-feeling improves more.

It is also preferred that the manufacturing method further includes a process of providing fillets by removing unnecessary portions of the collected raw catfish meat, a process of freezing the provided fillets without executing water-leaching, a process of thawing the frozen fillets, a process of grinding the thawed fillets to provide a ground fish meat, and a process of shaping the ground fish meat to provide paste product. The heating process is executed by heating the provided paste product.

According to the present invention, still further, a manufacturing apparatus of a fish-meat paste product includes a grinding means for grinding a collected raw catfish meat without executing water-leaching to provide a fish meat, and a heating means for heating a paste product obtained by shaping the fish meat from the grinding means, at a temperature in a range from 54 °C to 65 °C for at least approximately 20 minutes.

According to the present invention, further, a manufacturing apparatus of a fish-meat paste product includes a grinding means for grinding a collected raw catfish meat without executing water-leaching to provide a fish meat, and a heating means for heating a paste product obtained by shaping the fish meat from the grinding means, at a temperature in a range from 56 °C to 62 °C for at least approximately 120 minutes.

According to the present invention, further, a manufacturing apparatus of a fish-meat paste product includes a grinding means for grinding a collected raw catfish meat without executing water-leaching to provide a fish meat, a first heating means for heating a paste product obtained by shaping the fish meat from the grinding means, at a first temperature for at least approximately 20 minutes, and a second heating means for heating the heated paste product at a second temperature that is higher than the first temperature for at least approximately 15 minutes.

In this case, it is preferred that the first temperature is approximately 50 °C and the second temperature is approximately 80 °C. Thereby, the gel strength becomes higher and the elasticity and the texture further improve resulting that the food-feeling improves more.

It is preferred that the manufacturing apparatus of a fish-meat paste product further includes a freezing means for freezing fillets obtained by removing unnecessary portions of the collected raw catfish meat without executing water-leaching, a thawing means for thawing the fillets frozen by the freezing means, and the grinding means for grinding the fillets thawed by the thawing means to provide a ground fish meat. The heating means heats a paste product obtained by shaping the ground fish meat from the grinding means.

### EFFECT OF THE INVENTION

According to the present invention, by using catfish meat, it is not necessary to remove water-soluble protein and therefore no water-leaching processing is needed to perform after collection of the catfish meat. Therefore, the delicious taste of fish is completely remained and the original fish taste can be supplied. Also, because skins of the catfish are easily exfoliated, no skin can be mixed into the fish meat and thus good white appearance of the fish meat can be certainly maintained. Further, because the catfish particularly "pangasius" is cultivated in large quantities in Southeast Asia and thus it is possible to stably provide in bulk, stabilization in production and supply of the fish meat can be planned. Still further, because the catfish meat is cheap, a product price can be largely reduced. Furthermore, because no water-leaching processing is necessary to perform at all, not only the delicious taste of fish is maintained but also time and effort required for the water-leaching processing are reduced, and, in addition, no cost of water used for this water-leaching processing and no cost for treating the contaminated water due to the water-leaching processing are necessary. Therefore, a large manufacturing cost reduction and a significant improvement in the productivity that are not conceivable from the conventional manufacturing cost of the fish meat of a walleye pollock or other fish can be expected. Also, although the existing frozen fish-meat paste or surimi has to manage its safekeeping maintenance temperature at around 5 °C and thus it is necessary to perform its preprocessing in two or three days before the start of the manufacturing, however, as for a catfish, no such preprocessing is necessary. Namely, even if the preprocessing of the frozen catfish is performed just before the start of the manufacturing, no deterioration may occur at the safekeeping maintenance temperature. Thus, the manufacturing control becomes very easy. Particularly, according to the present invention, since, after a raw catfish meat is collected, the collected raw catfish meat is ground and shaped to provide a paste product, and then the paste product is heated at a temperature in a range from 54 °C to 65 °C for at least approximately 20 minutes, a gel strength of the paste product becomes extremely high. Also, it is possible to easily provide a good food-feeling paste product with enough elasticity and excellent texture.

### BRIEF DESCRIPTION OF DRAWINGS

FIG. 1 is a flow chart schematically illustrating processes in an embodiment of a manufacturing method of a fish-meat paste product according to the present invention;
FIG.2 is a characteristic graph illustrating a relationship between a heating temperature and a gel strength in EXAMPLE 1; and
FIG.3 is a characteristic graph illustrating a relationship between a heating temperature and a gel strength in EXAMPLE 2.

### BEST MODE FOR CARRYING OUT THE INVENTION

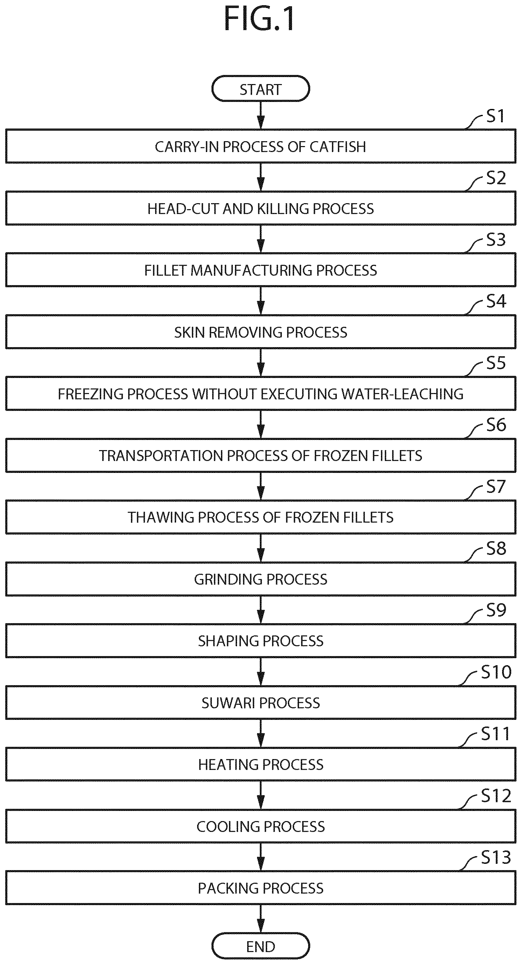

FIG. 1 schematically illustrates flow of processes in an embodiment of a manufacturing method of a fish-meat paste product according to the present invention. In this embodiment, a manufacturing method of Kamaboko as for the fish-meat paste product is described. However, various kinds of fish-meat paste other than kamaboko, such as for example Chikuwa, Satsumaage, Jakoten, Datemaki, Hanpen or Tsumire can be manufactured by using the similar manufacturing method.

As shown in FIG. 1, at first, a carry-in process of carrying in live catfishes (in this case, pangasiuses) to a live fish tank from a farm is performed (Step S1).

Then, a head-cut and killing process of cutting the heads of the catfishes and immediately killing the catfishes is performed (Step S2). The head-cut catfishes are put into a cold water tank.

Then, a fillet manufacturing process of manufacturing fillets of the catfishes is performed (Step S3). The fillets are produced by removing bones, internal organs and tails of the head-cut catfishes, and then by cutting them into two or three pieces or leaves.

Then, a skin removing process of removing skins of the fillets of the catfish is performed by passing the fillets through a skin-exfoliation machine after the fillets are washed with cold water (Step S4).

Thereafter, a freezing process of freezing in contact thus formed skinless fillets of the catfish is performed by putting the skinless fillets on a refrigeration pan without executing water-leaching processing (Step S5). The frozen skinless fillets are then stored in a freezer of -30 °C.

Then, a transportation process of transporting thus obtained frozen skinless fillets is performed (Step S6). If it is a long distance, the frozen fillets may be transported by using freezing containers.

Then, a thawing process of thawing the frozen skinless fillets of the catfish transported is performed by using flowing water for example (Step S7). For example, this thawing processing thaws the frozen skinless fillets of -30 °C until they become -3 °C.

Then, a grinding process of dehydrating and grinding the thawed skinless fillets to obtain a fish meat paste is performed (Step S8). This grinding process includes a rough grinding or a pre-grinding of grinding only fish meat to crush the cells for exposing protein (in this process, ice is added to prevent rising of the temperature), a salt grinding of further grinding the fish meat with addition of salt of 2-3 % with respect to the fish meat (for polymerizing salt-soluble-protein in the fish meat to form the actomyosin so as to obtain elasticity), and a main grinding of mixing the salt-ground fish meat with addition of a seasoning and/or a coloring agent if necessary.

Thereafter, a shaping process of shaping by machine work or manual labor the grinding-processed fish meat paste is performed after having strained if necessary (Step S9).

Then, a Suwari process for the fish meat paste product thus shaped is performed (Step S10). This Suwari process is a process of leaving the shaped fish meat paste product at a temperature in a range from 10 °C to 15 °C for a time in a rage from 18 to 20 hours, or at a temperature in a range from 30 °C to 40 °C for a time in a rage from 60 to 90 hours so that fibers of the fish meat protein form cancellous tissue. Thereby, viscosity of the fish meat paste product is lost and strong elasticity is produced.

Then, a heating process of heating thus obtained fish-meat paste product is performed (Step S11). The temperature and the time of this heating process are important in the present invention. In this embodiment, it is desirable that the heating temperature is in a range from 54 °C to 65 °C and the heating time is approximately 20 minutes. It is more desirable that the heating temperature is in a range from 57 °C to 63 °C and the heating time is approximately 20 minutes. It is the most desirable that the heating temperature is approximately 60 °C and the heating time is approximately 20 minutes. The concrete heating temperature and the concrete heating time will be described in EXAMPLE 1 in detail. It should be noted that the heating process may include a steam-heating process (for steamed Kamaboko and crab flavored kamaboko), a roast-heating process or a steam roast-heating process (for roasted Kamaboko, Chikuwa, bamboo leaf Kamaboko, Datemaki and crab flavored kamaboko), a boil heating process (for Hanpen and Tsumire), and a fry heating process (for fried Kamaboko, Satsumaage and Jakoten).

After the heating process, a cooling process of immediately cooling the heated product at a temperature of 10 °C or less is performed (Step S12). It is noted that, in this cooling process, the product is cooled but not refrigerated.

After the cooling process, a packing process of packing the cooled product is performed in various kinds of packing forms (Step S13).

As aforementioned in detail, according to this embodiment, since a catfish (pangasius) meat is used, it is not necessary to remove water-soluble protein and therefore no water-leaching processing is needed to perform after collection of the catfish meat. Therefore, the delicious taste of fish is completely remained and the original fish taste can be supplied. Also, since skins of the catfish (pangasius) are easily exfoliated, no skin can be mixed into the fish meat and thus good white appearance of the fish meat can be certainly maintained. Further, because the catfish particularly "pangasius" is cultivated in large quantities in Southeast Asia and thus it is possible to stably provide in bulk, stabilization in production and supply of the fish meat can be planned. Still further, because the catfish meat is cheap, a product price can be greatly reduced. Furthermore, because no water-leaching processing is necessary to perform at all, not only the delicious taste of fish is maintained but also time and effort required for the water-leaching processing are reduced, and, in addition, no cost of water used for this water-leaching processing and no cost for treating the contaminated water due to the water-leaching processing are necessary. Therefore, a large manufacturing cost reduction and a significant improvement in the productivity that are not conceivable from the conventional manufacturing cost of the fish meat of a walleye pollock or other fish can be expected. Also, although the existing frozen fish-meat paste or surimi has to manage its safekeeping maintenance temperature at around 5 °C and thus it is necessary to perform its preprocessing in two or three days before the start of the manufacturing, however, as for a catfish, no such preprocessing is necessary. Namely, even if the preprocessing of the frozen catfish is performed just before the start of the manufacturing, no deterioration may occur at the safekeeping maintenance temperature. Thus, the manufacturing control becomes very easy.

Particularly, according to this embodiment, since the paste product is heated at a temperature in a range from 54 °C to 65 °C for approximately 20 minutes, a gel strength of the paste product becomes extremely high. Also, it is possible to easily provide a good food-feeling paste product with enough elasticity and excellent texture. It is more desirable that the heating temperature is in a range from 57 °C to 63 °C and the heating time is approximately 20 minutes. It is the most desirable that the heating temperature is approximately 60 °C and the heating time is approximately 20 minutes.

Another embodiment of the manufacturing method of a fish-meat paste product according to the present invention will be described below.

In this embodiment, a heating temperature and a heating time of a heating process are different from these of the embodiment of FIG. 1 but contents of other processes in this embodiment are similar to these of the embodiment of FIG. 1.

The temperature and the time of this heating process are important in the present invention. In this embodiment, it is desirable that the heating temperature is in a range from 56 °C to 62 °C and the heating time is approximately 120 minutes. It is more desirable that the heating temperature is in a range from 59 °C to 61 °C and the heating time is approximately 120 minutes. It is the most desirable that the heating temperature is approximately 60 °C and the heating time is approximately 120 minutes. The concrete heating temperature and the concrete heating time will be described in EXAMPLE 2 in detail.

Further embodiment of the manufacturing method of a fish-meat paste product according to the present invention will be described below.

In this embodiment, a heating temperature and a heating time of a heating process are based on a two-staged heating treatment and thus they are different from these of the embodiment of FIG. 1, but contents of other processes in this embodiment are similar to these of the embodiment of FIG. 1.

The temperature and the time of this heating process are important in the present invention. In this embodiment, it is desirable that, at first, the paste product is heated at a first temperature for approximately 20 minutes, and then heated at a second temperature that is higher than the first temperature for approximately 15 minutes. It is desirable that the first temperature is approximately 50 °C and the second temperature is approximately 80 °C. The concrete heating temperature and the concrete heating time of this two-staged heating treatment will be described in EXAMPLE 3 in detail.

### EXAMPLE 1

A heating treatment of samples of the fish-meat paste product provided by performing the processes at Steps S1-S10 shown in FIG. 1 was performed. These samples were provided without executing water-leaching processing at all. The samples were put in a thermostatic chamber and heated for 20 minutes, and then gel strengths (g/cm²) thereof were measured. The heating temperatures were constant at 30 °C, 40 °C, 50 °C, 55 °C, 60 °C, 65 °C, 70 °C and 80 °C. As for the thermostatic chamber, a constant temperature immersion type controller of Thermomate BF200 manufactured by Yamato Scientific Co., Ltd. was used. The gel strength was measured by using a texture analyzer TA-XT2 manufactured by Stable Micro Systems Company. The number of the samples was 5.

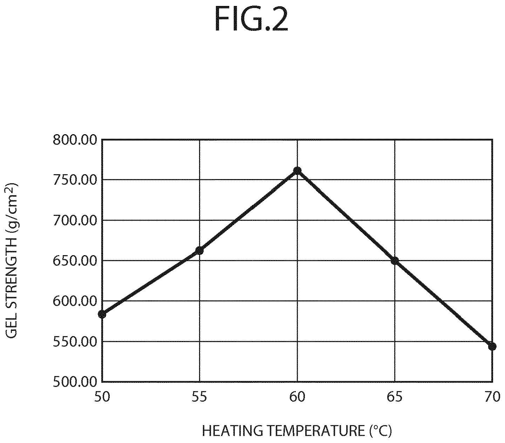

The result of the measurement of the gel strength when heated at a temperature from 50 °C to 80 °C for 20 minutes is shown in Table 1 and a part of the result is shown in FIG. 2. In case that the heating temperature was 30 °C, because the sample became paste-like, it was impossible to measure the gel strength. Also, in case that the heating temperature was 40 °C, because the sample became the intermediate state between the paste and the gel, it was impossible to punch the sample for measurement.

**TABLE 1**

| HEATING TEMPERATURE (°C) | GEL STRENGTH (g/cm²) |
|---|---|
| 50 | 585.20 |
| 55 | 663.40 |
| 60 | 761.60 |
| 65 | 649.30 |
| 70 | 542.50 |
| 80 | 416.70 |

As will be noted from Table 1 and FIG. 2, the gel strength was an extremely high value of 761.60 g/cm² when the heating temperature was 60 °C although the heating time was a short time period of 20 minutes. In this business field, if the gel strength is 650 g/cm² or more, it is possible to utilize it in the market as for the fish-meat paste product, and if the gel strength is 700 g/cm² or more, an evaluation of the fish-meat paste product becomes extremely higher. From FIG. 2, it is understood that the heating temperature range for obtaining the gel strength of 650 g/cm² or more is from 54 °C to 65 °C, and that the heating temperature range for obtaining the gel strength of 700 g/cm² or more is from 56.8 (57) °C to 62.7 (63) °C.

Therefore, according to EXAMPLE 1, it is revealed that the heating treatment is desirably performed at a temperature in a range from 54 °C to 65 °C for approximately 20 minutes. Also, the heating treatment is more desirably performed at a temperature in a range from 57 °C to 63 °C for approximately 20 minutes. The heating treatment is most desirably performed at a temperature of approximately 60 °C for approximately 20 minutes.

### COMPARATIVE EXAMPLE 1

A heating treatment of samples of the fish-meat paste product provided by executing water-leaching processing twice in the grinding process of Step S8 shown in FIG. 1 was performed. Namely, these samples were provided with executing water-leaching processing. The samples were put in a thermostatic chamber and heated for 20 minutes, and then gel strengths (g/cm²) thereof were measured. The heating temperatures were constant at 30 °C, 40 °C, 50 °C, 60 °C, 70 °C and 80 °C. As for the thermostatic chamber, a constant temperature immersion type controller of Thermomate BF200 manufactured by Yamato Scientific Co., Ltd. was used. The gel strength was measured by using a texture analyzer TA-XT2 manufactured by Stable Micro Systems Company. The number of the samples was 5.

The result of the measurement of the gel strength when heated at a temperature from 40 °C to 80 °C for 20 minutes is shown in Table 2. In case that the heating temperature was 30 °C, because the sample became paste-like, it was impossible to measure the gel strength.

**TABLE 2**

| HEATING TEMPERATURE (°C) | GEL STRENGTH (g/cm²) |
|---|---|
| 40 | 102.00 |
| 50 | 350.40 |
| 60 | 669.70 |
| 70 | 389.10 |
| 80 | 307.30 |

As will be noted from Table 2, the gel strength became the highest value of 669.70 g/cm² when the heating temperature was 60 °C. However, this value of 669.70 g/cm² was largely less than the corresponding value in EXAMPLE 1, and less than a high evaluation value of 700 g/cm² in this business field.

Therefore, according to COMPARATIVE EXAMPLE 1, it is revealed that, by executing the water-leaching processing, the gel strength never becomes higher causing elasticity and texture to deteriorate giving bad food-feeling. By executing the water-leaching processing, also, delicious taste of fish is removed and thus no original fish taste is supplied.

### EXAMPLE 2

A heating treatment of samples of the fish-meat paste product provided by performing the processes at Steps S1-S10 shown in FIG. 1 was performed. These samples were provided without executing water-leaching processing at all. The samples were put in a thermostatic chamber and heated for 120 minutes, and then gel strengths (g/cm²) thereof were measured. The heating temperatures were constant at 30 °C, 40 °C, 50 °C, 55 °C, 60 °C, 65 °C, 70 °C and 80 °C. As for the thermostatic chamber, a constant temperature immersion type controller of Thermomate BF200 manufactured by Yamato Scientific Co., Ltd. was used. The gel strength was measured by using a texture analyzer TA-XT2 manufactured by Stable Micro Systems Company. The number of the samples was 5.

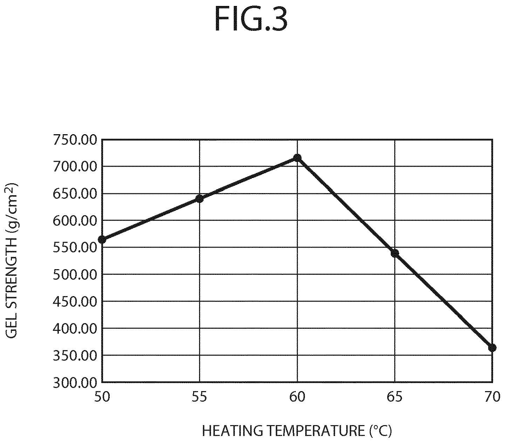

The result of the measurement of the gel strength when heated at a temperature from 40 °C to 80 °C for 120 minutes is shown in Table 3 and a part of the result is shown in FIG. 3. In case that the heating temperature was 30 °C, because the sample became paste-like, it was impossible to measure the gel strength.

**TABLE 3**

| HEATING TEMPERATURE (°C) | GEL STRENGTH (g/cm²) |
|---|---|
| 40 | 332.80 |
| 50 | 565.60 |
| 55 | 640.65 |
| 60 | 715.70 |
| 65 | 540.25 |
| 70 | 364.80 |
| 80 | 368.90 |

As will be noted from Table 3 and FIG. 3, the gel strength was an extremely high value of 715.70 g/cm² when the heating temperature was 60 °C. As mentioned before, in this business field, if the gel strength is 650 g/cm² or more, it is possible to utilize in the market as for the fish-meat paste product, and if the gel strength is 700 g/cm² or more, an evaluation of the fish-meat paste product becomes extremely higher. From FIG. 3, it is understood that the heating temperature range for obtaining the gel strength of 650 g/cm² or more is from 55.5 (56) °C to 61.9 (62) °C, and that the heating temperature range for obtaining the gel strength of 700 g/cm² or more is from 59.1 (59) °C to 60.5 (61) °C.

Therefore, according to EXAMPLE 2, it is revealed that the heating treatment is desirably performed at a temperature in a range from 56 °C to 62 °C for approximately 120 minutes. Also, the heating treatment is more desirably performed at a temperature in a range from 59 °C to 61 °C for approximately 120 minutes. The heating treatment is most desirably performed at a temperature of approximately 60 °C for approximately 120 minutes.

### COMPARATIVE EXAMPLE 2

A heating treatment of samples of the fish-meat paste product provided by executing water-leaching processing twice in the grinding process of Step S8 shown in FIG. 1 was performed. Namely, these samples were provided with executing water-leaching processing. The samples were put in a thermostatic chamber and heated for 120 minutes, and then gel strengths (g/cm²) thereof were measured. The heating temperatures were constant at 30 °C, 40 °C, 50 °C, 60 °C, 70 °C and 80 °C. As for the thermostatic chamber, a constant temperature immersion type controller of Thermomate BF200 manufactured by Yamato Scientific Co., Ltd. was used. The gel strength was measured by using a texture analyzer TA-XT2 manufactured by Stable Micro Systems Company. The number of the samples was 5.

The result of the measurement of the gel strength when heated at a temperature from 40 °C to 80 °C for 120 minutes is shown in Table 4. In case that the heating temperature was 30 °C, because the sample became paste-like, it was impossible to measure the gel strength.

**TABLE 4**

| HEATING TEMPERATURE | GEL STRENGTH |
|---|---|
| (°C) | (g/cm²) |
| 40 | 399.60 |
| 50 | 566.00 |
| 60 | 375.10 |
| 70 | 249.90 |
| 80 | 240.20 |

As will be noted from Table 4, the gel strength became the highest value of 566.00 g/cm² when the heating temperature was 50 °C. However, this value of 566.00 g/cm² was largely less than the corresponding value in EXAMPLE 2, less than a high evaluation value of 700 g/cm² in this business field, and also less than 650 g/cm² that was a value utilized in the market as for the fish-meat paste product.

Therefore, according to COMPARATIVE EXAMPLE 2, it is revealed that, by executing the water-leaching processing, the gel strength never becomes higher causing elasticity and texture to deteriorate giving bad food-feeling. By executing the water-leaching processing, also, delicious taste of fish is removed and thus no original fish taste is supplied.

### EXAMPLE 3

A two-staged heating treatment of samples of the fish-meat paste product provided by performing the processes at Steps S1-S10 shown in FIG. 1 was performed. These samples were provided without executing water-leaching processing at all. The samples were put in a thermostatic chamber and heated at a first temperature for 20 minutes, then heated at a second temperature for 15 minutes, and then gel strengths (g/cm²) thereof were measured. The first temperature was constant at 30 °C, 40 °C or 50 °C, and the second temperature of all was constant at 80 °C. In addition, a two-staged heating wherein the first temperature was constant at 7 °C for one night and the second temperature was constant at 80 °C for 15 minutes was performed. As for the thermostatic chamber, a constant temperature immersion type controller of Thermomate BF200 manufactured by Yamato Scientific Co., Ltd. was used. The gel strength was measured by using a texture analyzer TA-XT2 manufactured by Stable Micro Systems Company. The number of the samples was 5.

The result of the measurement of the gel strength when performing the two-staged heating is shown in Table 5.

**TABLE 5**

| HEATING TEMPERATURE AND HEATING TIME | GEL STRENGTH (g/cm²) |
|---|---|
| 30°C 20MIN. → 80°C 15MIN. | 501.30 |
| 40°C 20MIN. → 80°C. 15MIN. | 518.90 |
| 50°C 20MIN. → 80°C 15MIN. | 659.50 |
| 7°C ONE NIGHT → 80°C 15MIN. | 588.20 |

As will be noted from Table 5, the gel strength was an extremely high value of 659.50 g/cm² when the two-staged heating was performed at the first temperature of 50 °C for 20 minutes and at the second temperature of 80 °C for 15 minutes. As mentioned before, in this business field, if the gel strength is 650 g/cm² or more, it is possible to utilize in the market as for the fish-meat paste product. Thus, it is desirable that the two-staged heating with the first temperature of 50 °C for 20 minutes and thereafter with the second temperature of 80 °C for 15 minutes is performed.

Many widely different embodiments of the present invention may be constructed without departing from the spirit and scope of the present invention. It should be understood that the present invention is not limited to the specific embodiments described in the specification, except as defined in the appended claims.

### [INDUSTRICAL APPLICABILITY]

The present invention is applicable to manufacturing of a fish-meat paste product such as Kamaboko, Chikuwa, Satsumaage, Jakoten and else.

## Claims

1. A manufacturing method of a fish-meat paste product comprising processes of:
collecting a raw catfish meat;
grinding and shaping the collected raw catfish meat without executing water-leaching to provide a paste product; and
heating the paste product at a temperature in a range from 54 °C to 65 °C for at least approximately 20 minutes.

2. The manufacturing method of a fish-meat paste product as claimed in claim 1, wherein said temperature is in a range from 57 °C to 63 °C.

3. A manufacturing method of a fish-meat paste product comprising processes of:
collecting a raw catfish meat;
grinding and shaping the collected raw catfish meat without executing water-leaching to provide a paste product; and
heating the paste product at a temperature in a range from 56 °C to 62 °C for at least approximately 120 minutes.

4. The manufacturing method of a fish-meat paste product as claimed in claim 3, wherein said temperature is in a range from 59 °C to 61 °C.

5. A manufacturing method of a fish-meat paste product comprising processes of:
collecting a raw catfish meat;
grinding and shaping the collected raw catfish meat without executing water-leaching to provide a paste product;
heating the paste product at a first temperature for at least approximately 20 minutes; and
heating the heated paste product at a second temperature that is higher than said first temperature for at least approximately 15 minutes.

6. The manufacturing method of a fish-meat paste product as claimed in claim 5, wherein said first temperature is approximately 50 °C and said second temperature is approximately 80 °C.

7. The manufacturing method of a fish-meat paste product as claimed in any one of claims 1 to 6, wherein said method further comprises:
a process of providing fillets by removing unnecessary portions of the collected raw catfish meat;
a process of freezing the provided fillets without executing water-leaching;
a process of thawing the frozen fillets;
a process of grinding the thawed fillets to provide a ground fish meat; and
a process of shaping the ground fish meat to provide paste product,
said heating process being executed by heating the provided paste product.

8. A manufacturing apparatus of a fish-meat paste product comprising:
a grinding means for grinding a collected raw catfish meat without executing water-leaching to provide a fish meat; and
a heating means for heating a paste product obtained by shaping the fish meat from said grinding means, at a temperature in a range from 54 °C to 65 °C for at least approximately 20 minutes.

9. A manufacturing apparatus of a fish-meat paste product comprising:
a grinding means for grinding a collected raw catfish meat without executing water-leaching to provide a fish meat; and
a heating means for heating a paste product obtained by shaping the fish meat from said grinding means, at a temperature in a range from 56 °C to 62 °C for at least approximately 120 minutes.

10. A manufacturing apparatus of a fish-meat paste product comprising:
a grinding means for grinding a collected raw catfish meat without executing water-leaching to provide a fish meat;
a first heating means for heating a paste product obtained by shaping the fish meat from said grinding means, at a first temperature for at least approximately 20 minutes; and
a second heating means for heating the heated paste product at a second temperature that is higher than said first temperature for at least approximately 15 minutes.

11. The manufacturing apparatus of a fish-meat paste product as claimed in claim 10, wherein said first temperature is approximately 50 °C and said second temperature is approximately 80 °C.

12. The manufacturing apparatus of a fish-meat paste product as claimed in any one of claims 8 to 11, wherein said apparatus further comprises:
a freezing means for freezing fillets obtained by removing unnecessary portions of the collected raw catfish meat without executing water-leaching;
a thawing means for thawing the fillets frozen by said freezing means; and
the grinding means for grinding the fillets thawed by said thawing means to provide a ground fish meat,
said heating means heating a paste product obtained by shaping the ground fish meat from said grinding means.
